# EUROPEAN PATENT SPECIFICATION

(11) **EP 3 588 762 B1**
(45) Date of publication and mention of the grant of the patent: **31.01.2024**
(21) Application number: 19180712.2
(22) Date of filing: 17.06.2019
(51) Int. Cl.: H02M 3/158, H01F 17/06, H01F 27/29

(54) **MULTI-WINDING INDUCTIVE DEVICE FOR BI-DIRECTIONAL DC-DC CONVERTER, CONVERTER, AND POWER SUPPLY**
MEHRSPULIGE INDUKTIVE VORRICHTUNG FÜR BIDIREKTIONALEN GLEICHSTROMWANDLER, WANDLER UND STROMVERSORGUNG
DISPOSITIF INDUCTIF MULTI-ENROULEMENTS POUR CONVERTISSEUR CC-CC BIDIRECTIONNEL, CONVERTISSEUR ET ALIMENTATION ÉLECTRIQUE

(30) Priority: 22.06.2018 CN 201810652731
(43) Date of publication of application: 01.01.2020
(73) Proprietor: Santak Electronic (Shenzhen) Co., Ltd., Shenzhen (CN)
(72) Inventor: WEI, Jian, Shenzhen (CN); LIN, Pingchang, Shenzen, Guangdong (CN); ZHANG, Ping, Shenzhen (CN)
(74) Representative: Novagraaf Group

(56) References cited:
- EP-A1- 2 592 743
- EP-A1- 2 998 971
- US-A1- 2015 078 054
- US-A1- 2015 332 844
- US-A1- 2016 182 001

## Description

### TECHNICAL FIELD

The present invention relates to inductive devices, and in particular, to a multi-winding inductive device for a bi-directional DC-DC converter, a converter, and a power supply.

### BACKGROUND

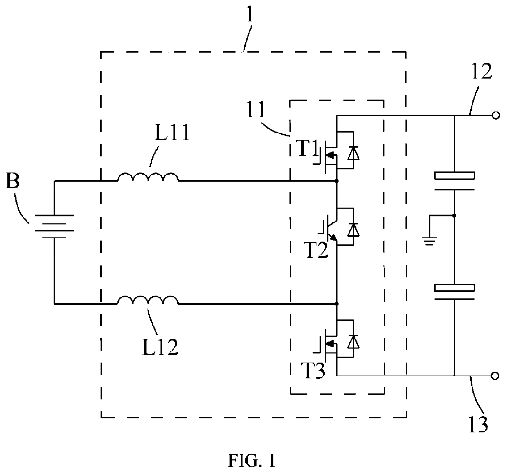

FIG. 1 is a circuit diagram of a bi-directional DC-DC converter in the prior art. As shown in FIG. 1, the bi-directional DC-DC converter 1 includes inductors L11 and L12 and an electronic device 11. The electronic device 11 includes a transistor T1, a transistor T2, and a transistor T3 that are sequentially connected between a positive DC bus 12 and a negative DC bus 13. One end of the inductor L11 is connected to a positive electrode of a rechargeable battery B, one end of the inductor L12 is connected to a negative electrode of the rechargeable battery B, and the other end of the inductor L11 is connected to the other end of the inductor L12 via the transistor T2.

The existing bi-directional DC-DC converter 1 includes the inductor L11 and the inductor L12, and is large in size and high in cost. Moreover, a large-range current measuring device is required to detect currents in the inductor L11 and the inductor L12, thus increasing detection costs.

US 2015 332 844 A1 discloses a multiphase inductor and a multiphase converter having the same, wherein the multiphase inductor comprises a first inductor and a second inductor, one terminal of the first inductor is connected to a node form by connecting a first MOSFET and a second MOSFET, one terminal of the second inductor is connected to a node form by connecting a third MOSFET and a fourth MOSFET, and the other terminal of the first inductor and the other terminal of the second inductor are connected in parallel.

EP 2 592 743 A1 discloses a magnetic circuit, which comprises two switch cells provided with respective a first and a second inductive elements represented by coils and coupled to be controlled alternately, wherein the first inductive element is connected between the positive of a battery and one switch cell, and the second unductive element is connected between the positive of the battery and the other switch cell.

US 2016 182 001 A1 discloses a common mode noise filter for an electrical system, wherein the noise filter comprises a magnetic structure, two wires wound around the magnetic structure, wherein two wires carry the common mode noise current from a noise source to a load.

EP 2 998 971 A1 discloses a power converter, which comprises an input connections and an output connections, a DC-DC converter and an inverter, a common mode choke arranged at the input side of the power converter, an output filter comprising a filter capacitor and a coupled differential mode choke, and another common mode choke arranged at an output side of the power converter.

US 2015 078 054 A1 discloses a common mode inductor device, which comprises a magnetic core forming a continuous loop, a first winding wound around the magnetic core, and second winding wound around the magnetic core.

### SUMMARY

To solve the above technical problems in the prior art, the present invention provides a multi-winding inductive device for a bi-directional DC-DC converter as set forth in claim 1, a bi-directional DC-DC converter s set forth in claim 9, a DC power supply as set forth in claim 12 and an uninterruptible power supply as set forth in claim 13. Further embodiments are inter alia disclosed in the dependent claims.

The multi-winding inductive device inter alia includes:
a single magnetic core; and
multiple windings wound round the single magnetic core, where the multiple windings include a first winding and a second winding in the same winding direction, the first winding is adapted to be electrically conductively connected to the second winding and has an incoming end and an outgoing end, and the incoming end or the outgoing end of the first winding includes two shunt terminals. The multiple windings further include a third winding wound around the single magnetic core, wherein the third winding is in a winding direction opposite to that of the first winding and the third winding and the first winding have the same number of turns.

Preferably, the first winding is connected in series to the second winding via a rechargeable battery.

Preferably, the first winding and the second winding have the same number of turns.

Preferably, the second winding has an incoming end and an outgoing end, and the third winding has an incoming end and an outgoing end, where
the incoming end or the outgoing end of the second winding includes two shunt terminals, and/or the incoming end or the outgoing end of the third winding includes two shunt terminals.

Preferably, the incoming end of the first winding and the incoming end of the second winding are dotted terminals, the incoming end of the first winding and the incoming end of the second winding each have an insulating marker for marking it as a differential-mode current input end, and the outgoing end of the first winding and the outgoing end of the second winding each have an insulating marker for marking it as a differential-mode current output end; and/or the outgoing end of the third winding and the incoming end of the first winding are dotted terminals, the incoming end of the third winding has an insulating marker for marking it as a differential-mode current input end, and the outgoing end of the third winding has an insulating marker for marking it as a differential-mode current output end.

Preferably, the multi-winding inductive device further includes an insulating member for separating each of the multiple windings, and the insulating member is bonded to the single magnetic core by an insulating paste.

Preferably, each of the multiple windings is a single-strand or multi-strand round wire or flat wire.

Preferably, the single magnetic core is toroidal.

The bi-directional DC-DC converter, inter alia including:
the multi-winding inductive device for a bi-directional DC-DC converter as described above, where magnetic fields generated by currents in the first winding and the second winding are in the same direction; and
an electronic device including multiple transistors and connected between the multi-winding inductive device and a DC bus, where the multiple transistors are controlled to alternately form a first current loop and a second current loop in a charging mode or a discharging mode, the first current loop includes a rechargeable battery, the first winding, and the second winding connected in series, and the second current loop includes the rechargeable battery, the first winding, the second winding, and the DC bus connected in series.

Preferably, the DC bus includes a positive DC bus and a negative DC bus, the electronic device includes a first transistor, a second transistor, and a third transistor that are sequentially connected between the positive DC bus and the negative DC bus, the first winding is connected between a node formed by connecting the first transistor and the second transistor and a positive electrode of the rechargeable battery, and the second winding is connected between a node formed by connecting the second transistor and the third transistor and a negative electrode of the rechargeable battery.

Preferably, the bi-directional DC-DC converter further includes a capacitive component connected in parallel to the rechargeable battery, the capacitive component includes two capacitors connected in series, and a node formed by connecting the two capacitors is grounded.

The DC power supply, includes the bi-directional DC-DC converter as described above and a rechargeable battery.

The uninterruptible power supply, includes the DC power supply as described above and an inverter.

The multi-winding inductive device of the present invention is small in size and low in cost. A shunt ratio is realized for currents in the windings, and the currents in the windings can be measured by a small-range and low-cost current measuring device. The insulating member avoids short circuits between the multiple windings.

### BRIEF DESCRIPTION OF THE DRAWINGS

Embodiments of the present invention are further illustrated below with reference to the accompanying drawings:
FIG. 1 is a circuit diagram of a bi-directional DC-DC converter in the prior art.
FIG. 2 is a schematic three-dimensional diagram of a multi-winding inductive device according to a first example useful for the understanding of the present invention.
FIG. 3 is an exploded diagram of the multi-winding inductive device shown in FIG. 2.
FIG. 4 is a schematic structural diagram of the multi-winding inductive device shown in FIG. 2.
FIG. 5 is a schematic circuit diagram of the multi-winding inductive device shown in FIG. 2 connected in a bi-directional DC-DC converter.
FIG. 6 is a schematic three-dimensional diagram of a multi-winding inductive device according to an embodiment of the present invention.
FIG. 7 is an exploded diagram of the multi-winding inductive device shown in FIG. 6.
FIG. 8 is a schematic structural diagram of the multi-winding inductive device shown in FIG. 6 used as a differential-mode inductor.
FIG. 9 is a schematic structural diagram of the multi-winding inductive device shown in FIG. 6 used as a common-mode inductor.
FIG. 10 is a schematic three-dimensional diagram of a multi-winding inductive device according to an example useful for understanding the present invention.
FIG. 11 is a circuit diagram of a bi-directional DC-DC converter according to an example useful for understanding the present invention.

### DETAILED DESCRIPTION

The inventor studied a charging mode and a discharging mode of bi-directional DC-DC converters the same as or similar to that in FIG. 1. The following description is given by using the bi-directional DC-DC converter 1 shown in FIG. 1 as an example. In the discharging mode, the following two steps are alternately performed: 1) controlling a transistor T1 to be turned off, a transistor T2 to be turned on, and a transistor T3 to be turned off, forming a current loop by a rechargeable battery B, an inductor L1, the transistor T2, and an inductor L12, and storing energy by the inductor L11 and the inductor L12; and 2) controlling the transistor T2 to be turned off, and forming a current loop by a negative DC bus 13, a diode connected in anti-parallel to the transistor T3, the inductor L12, the rechargeable battery B, the inductor L11, a diode connected in anti-parallel to the transistor T1, and a positive DC bus 12, in which case the inductor L11 and the inductor L12 release energy to the positive DC bus 12 and the negative DC bus 13. In the charging mode, the following two steps are alternately performed: 1) controlling the transistor T1 to be turned on, the transistor T2 to be turned off, and the transistor T3 to be turned on, forming a current loop by the positive DC bus 12, the transistor T1, the inductor L11, the rechargeable battery B, the inductor L12, the transistor T3, and the negative DC bus 13, and storing energy by the inductor L11 and the inductor L12; and 2) controlling the transistors T1 to T3 to be turned off, forming a current loop by the inductor L12, a diode connected in anti-parallel to the transistor T2, the inductor L11, and the rechargeable battery B, and releasing energy by the inductor L12 and the inductor L11 and charging the rechargeable battery B.

Because two independent inductors, the inductor L11 and the inductor L12 in the existing bi-directional DC-DC converter each have a magnetic core, the two inductors are large in size and high in cost. The inventor has found that in the charging and discharging modes of the existing bi-directional DC-DC converter, the inductor L11 and the inductor L12 simultaneously store and release energy, and the electronic device 11 allows the inductor L11 and the inductor L12 to be connected in series. Therefore, it is possible to wind the inductor L11 and the inductor L12 on the same magnetic core to reduce the size and the costs.

To make objectives, technical solutions, and advantages of the present invention clearer and more comprehensive, the present invention will be further described in detail below through specific embodiments with reference to the accompanying drawings.

### Example 1

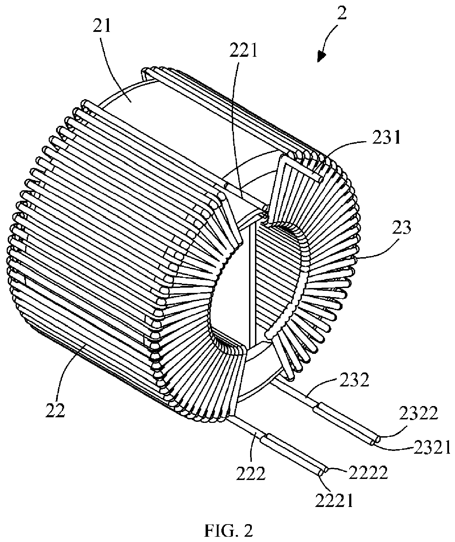

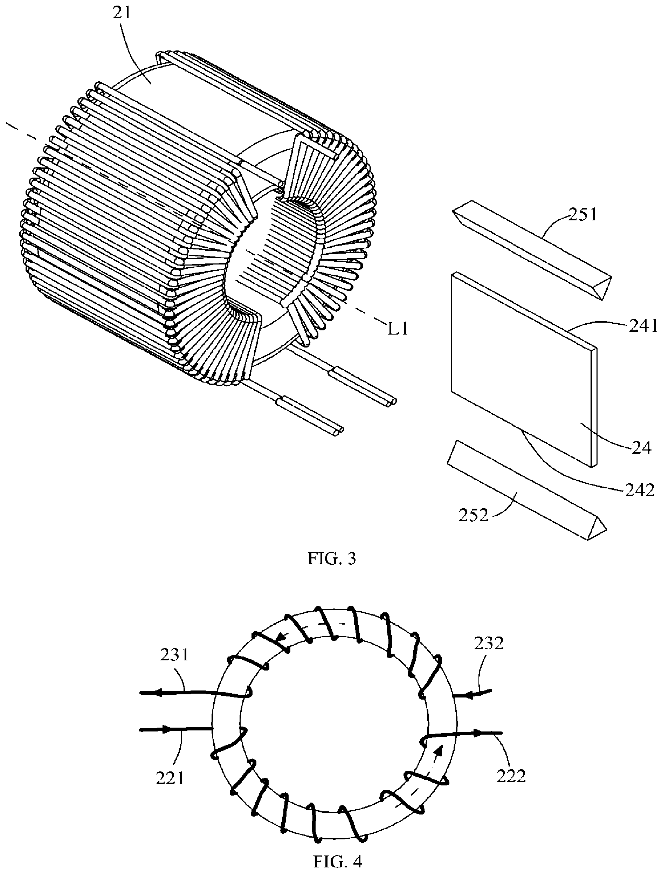

FIG. 2 is a schematic three-dimensional diagram of a multi-winding inductive device according to a first example. As shown in FIG. 2, a multi-winding inductive device 2 includes a circular toroidal magnetic core 21, multiple windings wound around the circular toroidal magnetic core 21, and an insulating plate located inside the circular toroidal magnetic core 21 (illustrated below with reference to FIG. 3).

The multiple windings include a winding 22 and a winding 23 in the same winding direction, and the winding 22 and the winding 23 are formed by winding identical round enamelled wires. The windings 22 and 23 are both wound alternately on an outer sidewall and an inner sidewall of the circular toroidal magnetic core 21 in a clockwise direction.

The winding 22 is a single-strand round enamelled wire having an incoming end 221 and an outgoing end 222. The outgoing end 222 has identical shunt terminals 2221 and 2222, and the shunt terminals 2221 and 2222 are connected and merged together at one end. Therefore, the shunt terminals 2221 and 2222 can be regarded as two shunt terminals leading out from the outgoing end 222. When the winding 22 is electrified with a current, the current in the incoming end 221 is equal to the sum of currents in the shunt terminals 2221 and 2222. If the shunt terminals 2221 and 2222 have the same length, a ratio of the currents in the shunt terminals 2221 and 2222 is proportional to a ratio of their cross-sectional areas. Thereby, the current in the incoming end 221 can be calculated by measuring the current in the shunt terminal 2221 or 2222 by a low-power current measuring device.

The winding 23 also has an incoming end 232 and an outgoing end 231. The incoming end 232 has two identical shunt terminals 2321 and 2322.

FIG. 3 is an exploded diagram of the multi-winding inductive device shown in FIG. 2. As shown in FIG. 3, an insulating plate 24 is in a square plate shape, and has a side edge 241 and a side edge 242 that are disposed oppositely. The side edges 241 and 242 are parallel to a central axis L1 of the circular toroidal magnetic core 21, and a distance between the side edge 241 and the side edge 242 is slightly smaller than an inner diameter of the circular toroidal magnetic core 21.

Insulating pastes 251 and 252 are respectively filled between the side edges 241 and 242 of the insulating plate 24 and the inner sidewall of the circular toroidal magnetic core 21 (the insulating pastes 251 and 252 are schematically shown in FIG. 3). The insulating pastes 251 and 252 are used for bonding the insulating plate 24 to the inner sidewall of the circular toroidal magnetic core 21. The present invention is not intended to limit the shape of the insulating pastes 251 and 252, and any shape is feasible according to actual production requirements and manufacturing processes, as long as it is ensured that the insulating plate 24 is bonded to the inner sidewall of the circular toroidal magnetic core 21.

The assembling or manufacturing process of the multi-winding inductive device 2 will be briefly described below. First, one circular toroidal magnetic core 21 and two round enamelled wires are selected. One of the round enamelled wires is wound alternately on the outer sidewall and the inner sidewall of the circular toroidal magnetic core 21 in a clockwise direction to form the winding 22, and the other round enamelled wire is wound alternately on the outer sidewall and the inner sidewall of the circular toroidal magnetic core 21 in a clockwise direction to form the winding 23. Then, one insulating plate 24 is selected, and placed inside the circular toroidal magnetic core 21 for separating the winding 22 from the winding 23. Finally, the insulating pastes 251 and 252 are filled between the side edges 241 and 242 of the insulating plate 24 and the inner sidewall of the circular toroidal magnetic core 21.

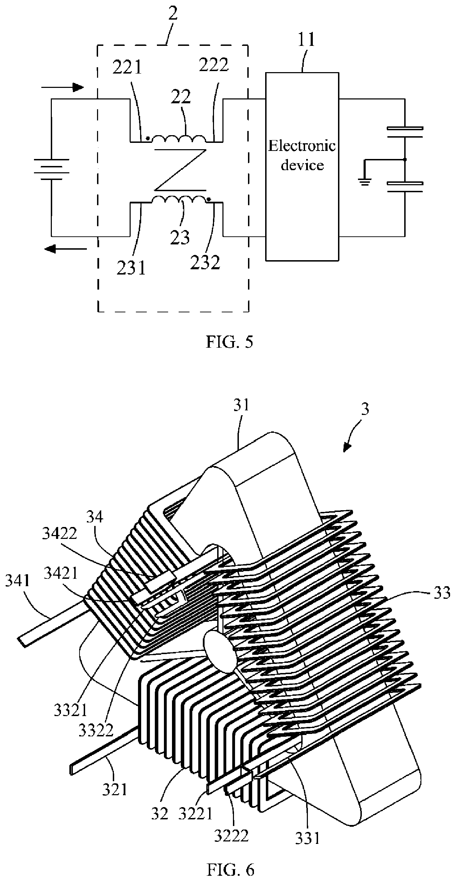

FIG. 4 is a schematic structural view of the multi-winding inductive device shown in FIG. 2, and FIG. 5 is a schematic circuit diagram of the multi-winding inductive device shown in FIG. 2 connected in a bi-directional DC-DC converter. As shown in FIG. 4 and FIG. 5, the incoming end 221 of the winding 22 and the incoming end 232 of the winding 23 are dotted terminals. The incoming end 221 of the winding 22 is connected to a positive electrode of a rechargeable battery. The outgoing end 231 of the winding 23 is connected to a negative electrode of the rechargeable battery. The outgoing end 222 of the winding 22 and the incoming end 232 of the winding 23 are connected via a line formed by an electronic device 11. Thereby, the winding 22 and the winding 23 are non-electrically isolated, and the winding 22 is electrically conductively connected to the winding 23, i.e., connected in series to the winding 23 via the rechargeable battery. When the rechargeable battery is discharged, a discharge current or operating current (i.e., a differential-mode current) of the rechargeable battery flows from the incoming end 221 of the winding 22 to the outgoing end 222, and from the incoming end 232 of the winding 23 to the outgoing end 231. The directions of magnetic fields generated by the windings 22 and 23 are indicated by dashed arrows in FIG. 4. The magnetic fields generated by the winding 22 and the winding 23 are in the same direction. Thereby, the winding 22 and the winding 23 realize conversion of electric energy and magnetic field energy, thereby realizing discharging of the rechargeable battery. Similarly, the winding 22 and the winding 23 can realize charging of the rechargeable battery.

When the multi-winding inductive device of this example is used in the bi-directional DC-DC converter, the outgoing end 231 of the winding 23 can also be connected to the positive electrode of the rechargeable battery, and the incoming end 221 of the winding 22 can be connected to the negative electrode of the rechargeable battery.

The winding 22 and the winding 23 preferably have the same number of turns, thereby balancing voltages on DC buses in charging and discharging modes.

The windings 22 and 23 in the multi-winding inductive device 2 are wound on the same circular toroidal magnetic core 21 in the same winding direction, thus achieving a small size and low costs.

One end of the winding 22 or 23 has two shunt terminals that are connected in parallel and have equal lengths. The two shunt terminals realize proportional shunting of the current in the winding, and therefore, the current in the winding can be measured by a small-range and low-cost current measuring device.

The insulating plate 24 is located between the winding 22 and the winding 23, for separating the winding 22 from the winding 23. The insulating plate 24 can avoid short circuits caused by electrical connections of the winding 22 and the winding 23 at places where they are close to each other.

### Embodiment

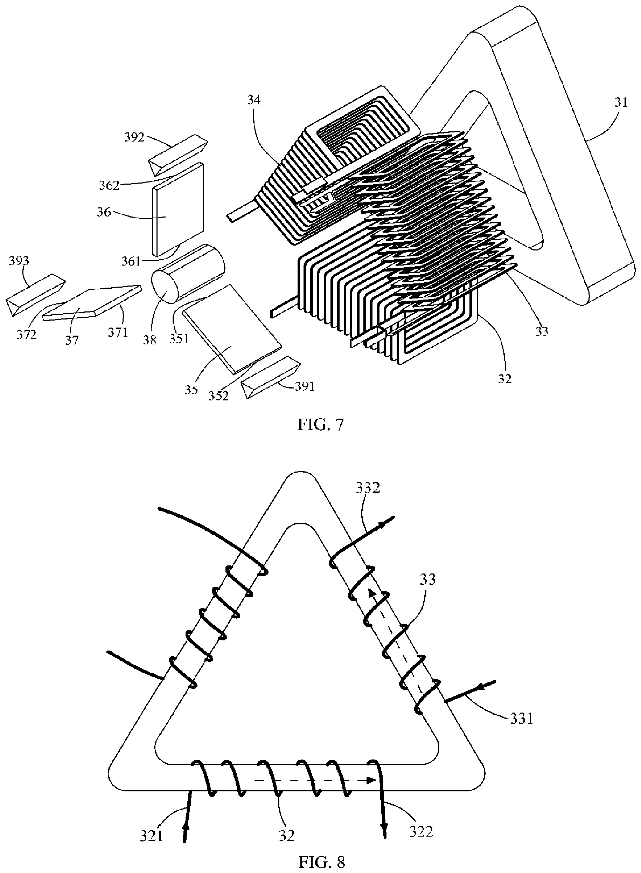

FIG. 6 is a schematic three-dimensional diagram of a multi-winding inductive device according to an embodiment of the present invention. As shown in FIG. 6, a multi-winding inductive device 3 includes a triangular toroidal magnetic core 31, multiple windings wound around the triangular toroidal magnetic core 31, and three insulating plates and insulating pastes located inside the triangular toroidal magnetic core 31 (illustrated below with reference to FIG. 7).

The multiple windings include a winding 32, a winding 33, and a winding 34. The windings 32, 33, and 34 are all formed by winding identical flat enamelled wires. The windings 32 and 33 are wound alternately on an outer sidewall and an inner sidewall of the triangular toroidal magnetic core 31 in a clockwise direction. The winding 34 is wound alternately on the outer sidewall and the inner sidewall of the triangular toroidal magnetic core 31 in a counterclockwise direction.

A description is given by using the winding 32 as an example. The winding 32 has an incoming end 321 and an outgoing end 322. The outgoing end 322 includes two shunt terminals 3221 and 3222, and the shunt terminals 3221 and 3222 are connected and merged together at one end. Therefore, the shunting terminals 3221 and 3222 can be regarded as two shunting terminals leading out from the outgoing end 322. When a current flows into the incoming end 321, the current in the incoming end 321 is equal to the sum of currents in the shunt terminals 3221 and 3222. The shunt terminals 3221 and 3222 preferably have the same length and width. In this case, a ratio of the currents in the shunt terminals 3221 and 3222 is proportional to a ratio of their thicknesses. Therefore, the current in the incoming end 321 can be calculated by measuring the current in the shunt terminal 3221 or the shunt terminal 3222 by a low-power current measuring device.

The winding 33 also has an incoming end 331 and an outgoing end 332. The outgoing end 332 has two shunt terminals 3321 and 3322 of the same length and width.

The winding 34 also has an outgoing end 341 and an incoming end 342. The incoming end 342 has two shunt terminals 3421 and 3422 of the same length and width.

FIG. 7 is an exploded diagram of the multi-winding inductive device shown in FIG. 6. As shown in FIG. 7, an insulating plate 35 is located between the winding 32 and the winding 33 for separating them; an insulating plate 36 is located between the winding 33 and the winding 34 for separating them; and an insulating plate 37 is located between the winding 34 and the winding 32 for separating them.

The insulating plate 35 has side edges 351 and 352 that are disposed oppositely. The side edge 351 is bonded to the insulating paste 38, and the side edge 352 is bonded to the inner sidewall of the triangular toroidal magnetic core 31 by the insulating paste 391. Likewise, one side edge 361 of the insulating plate 36 is bonded to the insulating paste 38, and the other side edge 362 is bonded to the inner sidewall of the triangular toroidal magnetic core 31 by the insulating paste 392. One side edge 371 of the insulating plate 37 is bonded to the insulating paste 38, and the other side edge 372 is bonded to the inner sidewall of the triangular toroidal magnetic core 31 by the insulating paste 393. The insulating plates 35, 36, and 37 are preferably plates in the same shape, to facilitate mass production and reduce production costs. In another embodiment of the present invention, the insulating plates 35, 36, and 37 are integrally formed of an insulating material, and an included angle between planes where any two of the insulating plates are located is 120°.

The insulating pastes 38, 391, 392, and 393 are shown schematically in FIG. 7. The present invention is not intended to limit the shapes of the insulating pastes 38, 391, 392, and 393, and they may be in any shapes according to actual production requirements and manufacturing processes, as long as it is ensured that the side edge 352 of the insulating plate 35, the side edge 362 of the insulating plate 36, and the side edge 372 of the insulating plate 37 are bonded to the inner sidewall of the triangular toroidal magnetic core 31.

The assembling or manufacturing process of the multi-winding inductive device 3 will be briefly described below. First, one triangular toroidal magnetic core 31 and three flat enamelled wires are selected. Two flat enamelled wires are wound alternately on the outer sidewall and the inner sidewall of the triangular toroidal magnetic core 31 in a clockwise direction to form the windings 32 and 33, respectively, and the third flat enamelled wire is wound alternately on the outer sidewall and the inner sidewall of the triangular toroidal magnetic core 31 in a counterclockwise direction to form the winding 34. Then, three identical insulating plates are taken and placed respectively between any two of the windings 32, 33, and 34. Finally, insulating pastes are filled between one side edge of the insulating plates and the inner sidewall of the triangular toroidal magnetic core 31 to form the insulating pastes 391, 392, and 393, and an insulating paste is filled between the other side edge of the three insulating plates to form the insulating paste 38.

FIG. 8 is a schematic structural diagram of the multi-winding inductive device shown in FIG. 6 used as a differential-mode inductor. As shown in FIG. 8, the winding 32 is electrically conductively connected to the winding 33, i.e., connected in series to the winding 33 via a rechargeable battery (not shown in FIG. 8). The incoming end 321 of the winding 32 and the incoming end 331 of the winding 33 are dotted terminals. The incoming end 321 of the winding 32 is connected to a positive electrode of a rechargeable battery, and the outgoing end 332 of the winding 33 is connected to a negative electrode of the rechargeable battery. The outgoing end 322 of the winding 32 and the incoming end 331 of the winding 33 are connected via an electronic device 11 in a bi-directional DC-DC converter. When the rechargeable battery is discharged, the direction of a discharge current or operating current (i.e., a differential-mode current) of the rechargeable battery is shown by an arrow in FIG. 8. The directions of magnetic fields generated by the windings 32 and 33 (shown by dashed arrows in FIG. 8) are the same. In this case, the multi-winding inductive device 3 is used as a differential-mode inductor. The winding 32 and the winding 33 preferably have the same number of turns, thereby balancing voltages on DC buses when the windings are used in the bi-directional DC-DC converter.

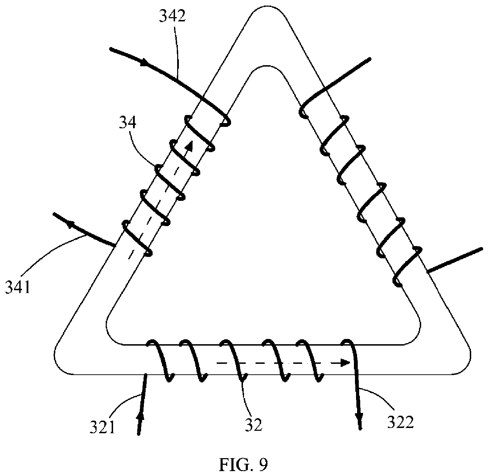

FIG. 9 is a schematic structural diagram of the multi-winding inductive device shown in FIG. 6 used as a common-mode inductor. As shown in FIG. 9, the winding 32 and the winding 34 that are wound in opposite directions are selected. The incoming end 321 of the winding 32 and the outgoing end 341 of the winding 34 are dotted terminals. The outgoing end 322 of the winding 32 is connected to the incoming end 342 of the winding 34 via an electronic line.

When the operating current (i.e., the differential-mode current) in the circuit flows through the winding 32 and the winding 34, that is, the current flows in from the incoming end 321 of the winding 32, flows out of its outgoing end 322, passes through the electronic line, then flows into the incoming end 342 of the winding 34, and finally flows out of its outgoing end 341. The directions (shown by dashed arrows in FIG. 9) of the magnetic fields generated by the winding 32 and the winding 34 are opposite. The winding 32 and the winding 34 preferably have the same number of turns, and the magnetic fields generated by the two cancel each other out. In this case, the operating current is mainly affected by resistances of the winding 32 and the winding 34. When a common-mode current flows through the winding 32 and the winding 34, because of the same direction of the common-mode current, i.e., the common-mode current flows into the incoming end 321 of the winding 32 and flows out of the outgoing end 322, and at the same time, the common-mode current flows into the outgoing end 341 of the winding 34 and flows out of the incoming end 342, the winding 32 and the winding 34 generate magnetic fields in the same direction, thereby increasing the inductive impedance of coils, such that the coils present a high impedance and generate a strong damping effect, so as to attenuate the common-mode current and achieve the purpose of filtering.

The multi-winding inductive device 3 of this embodiment has the windings 32, 33, and 34 wound on the same triangular toroidal magnetic core 31, thus achieving a small size and low costs. Moreover, the function of a common-mode inductor is integrated, thus expanding application scenarios.

In another application scenario of the present invention, the winding 34 can also be connected to an alternating current power supply. In this case, since a magnetic field generated by an alternating current in the winding 34 periodically changes and does not affect the magnetic fields in the windings 32 and 33, the multi-winding inductive device 3 can also be used for filtering high-frequency components in the alternating current power supply.

In another embodiment of the present invention, three windings are wound on the toroidal magnetic core in the same direction, where two of them are used as differential-mode inductors in a bi-directional DC-DC converter, and the other is connected to an alternating current power supply in an uninterruptible power supply and used for filtering.

### Example 2

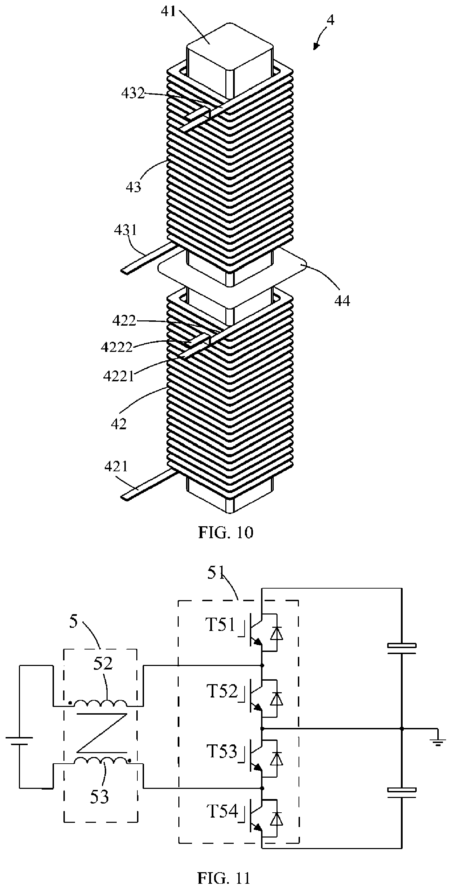

FIG. 10 is a schematic three-dimensional diagram of a multi-winding inductive device according to a second example useful for understanding the present invention. As shown in FIG. 10, a multi-winding inductive device 4 includes a cylindrical magnetic core 41, multiple windings wound around the cylindrical magnetic core 41, and an insulating plate 44 located between a winding 42 and a winding 43.

The multiple windings include the windings 42 and 43 wound around the cylindrical magnetic core 41 in a counterclockwise direction, and the windings 42 and 43 are formed by winding identical flat enamelled wires. The winding 42 has an incoming end 421 and an outgoing end 422, and the outgoing end 422 includes two shunt terminals 4221 and 4222. The shunt terminals 4221 and 4222 have the same length and width, and a ratio of currents in the shunt terminals 4221 and 4222 is proportional to a ratio of their thicknesses. Therefore, a current in the incoming end 421 can be calculated by measuring the current in the shunt terminal 4221 or the shunt terminal 4222 by a low-power current measuring device.

The winding 43 and the winding 42 have the same number of turns. The winding 43 also has an incoming end 431 and an outgoing end 432, and the outgoing end 432 includes two shunt terminals.

The insulating plate 44 is toroidal and is sleeved on the cylindrical magnetic core 41. An inner sidewall of the insulating plate 44 and an outer sidewall of the cylindrical magnetic core 41 are bonded by an insulating paste.

When the multi-winding inductive device 4 of this embodiment is used in a bi-directional DC-DC converter, a positive electrode and a negative electrode of a rechargeable battery are respectively connected to the incoming end 431 of the winding 43 and the outgoing end 422 of the winding 42, the outgoing end 432 of the winding 43 is connected to the incoming end 421 of the winding 42 via a line formed by an electronic device 11 in the bi-directional DC-DC converter.

In another embodiment of the present invention, the multi-winding inductive device further includes an insulating marker such as an insulating sleeve, a color code collar, or an insulating tape that is sleeved on the incoming end of one or more windings, where the insulating marker has a "+" or "positive" shaped coating, groove, or bump for marking it as a differential-mode current input end or as being used for connection to a positive electrode of a rechargeable battery; and an insulating marker such as an insulating sleeve, a color code collar, or an insulating tape that is sleeved on the outgoing end of one or more windings, where the insulating marker has a "-" or "negative" shaped coating, groove, or bump for marking it as a differential-mode current output end or as being used for connection to a negative electrode of the rechargeable battery. When the multi-winding inductive device of this embodiment is connected to the bi-directional DC-DC converter, the terminal having the "+" or "positive" shaped coating, groove, or bump is connected to the positive electrode of the rechargeable battery, and the other terminal having the "-" or "negative" shaped coating, groove, or bump is connected to the negative electrode of the rechargeable battery, thereby avoiding magnetic field cancellation in the toroidal magnetic core caused by mis-connection and mis-assembly of the windings, and reducing detection time and assembly time.

The winding of the present invention is not limited to being formed by a single-strand round enamelled wire or a flat enamelled wire. In other embodiments of the present invention, the winding is selected from a multi-strand round enamelled wire, a multi-strand round cable, a multi-strand flat enamelled wire, or a multi-strand flat cable. When all of the wires are the same, a proportional relationship between a current in one of the wires and a total current in the winding can be known directly based on the total number of strands, thereby enabling shunt sampling.

In other embodiments of the present invention, the circular toroidal magnetic core 21 or the triangular toroidal magnetic core 31 is replaced with a toroidal magnetic core in various shapes such as an elliptical toroidal magnetic core, a square toroidal magnetic core, a hexagonal toroidal magnetic core, or the like.

In other embodiments of the present invention, the number of windings wound on the toroidal magnetic core is more than three, in which at least two windings are in the same winding direction. In other embodiments of the present invention, the multi-winding inductive device does not have an insulating plate and an insulating paste for separating each of the multiple windings, but has an insulating member such as an insulating tape wound around the magnetic core or an insulating paste wrapped around the magnetic core, thus avoiding short circuits between the windings.

### Example 3

A bi-directional DC-DC converter is provided in this example. For example, as shown in FIG. 5, the bi-directional DC-DC converter includes the multi-winding inductive device 2 described above, and an electronic device 11 connected between the multi-winding inductive device 2 and DC buses. The multi-winding inductive device 2 includes the windings 22 and 23 in the same winding direction. The electronic device 11 includes three transistors T1, T2, and T3 connected sequentially between a positive DC bus and a negative DC bus. The winding 22 is connected between a node formed by connecting the transistor T1 and the transistor T2 and a positive electrode of a rechargeable battery, and the winding 23 is connected between a node formed by connecting the transistor T2 and the transistor T3 and a negative electrode of the rechargeable battery.

The bi-directional DC-DC converter is controlled to alternately form a first current loop and a second current loop in a discharging or charging mode as follows: the first current loop includes the winding 23, the rechargeable battery, the winding 22, and the turned-on transistor T2; the second current loop includes the turned-on transistor T1, the positive DC bus, the negative DC bus, the turned-on transistor T3, the winding 23, the rechargeable battery, and the winding 22.

### Example 4

FIG. 11 is a circuit diagram of a bi-directional DC-DC converter. As shown in FIG. 11, the bi-directional DC-DC converter includes a multi-winding inductive device 5, and an electronic device 51 connected between the multi-winding inductive device 2 and DC buses. The multi-winding inductive device 5 is the same as the multi-winding inductive device 2 in example 1.

The electronic device 51 includes four transistors T51, T52, T53, and T54 connected sequentially between a positive DC bus and a negative DC bus. The winding 52 is connected between a node formed by connecting the transistor T51 and the transistor T52 and a positive electrode of a rechargeable battery. The winding 53 is connected between a node formed by connecting the transistor T53 and the transistor T54 and a negative electrode of the rechargeable battery. Moreover, a node formed by connecting the transistor T52 and the transistor T53 is grounded. The bi-directional DC-DC converter is controlled to alternately form a first current loop and a second current loop in a discharging or charging mode as follows: the first current loop includes the rechargeable battery, the winding 52, the turned-on transistors T52 and T53, and the winding 53; the second current loop includes the turned-on transistor T51, the positive DC bus, the negative DC bus, the turned-on transistor T54, the winding 53, the rechargeable battery, and the winding 52.

In other examples, the bi-directional DC-DC converter further includes a capacitive component connected in parallel to the rechargeable battery. The capacitive component includes two capacitors connected in series, and a node formed by connecting the two capacitors is grounded.

The transistor in the above examples includes an insulated gate bipolar transistor having an anti-parallel diode. It will be apparent to those skilled in the art that in other examples, the transistor in the above examples may also be replaced by a metal-oxide-semiconductor field-effect transistor having an anti-parallel diode.

### Example 5

A DC power supply is provided in this example. The DC power supply includes the bi-directional DC-DC converter in the above example and a rechargeable battery.

### Example 6

An uninterruptible power supply is provided in this example. The uninterruptible power supply includes the DC power supply in Example 5 described above and an inverter. Although the present invention has been described through preferred embodiments, the present invention is not limited to the embodiments described herein, but includes various changes and variations which fall within the scope of the appended claims.

## Claims

1. A multi-winding inductive device (3) for a bi-directional DC-DC converter, comprising:
a single magnetic core (31); and
multiple windings wound round the single magnetic core (31), wherein the multiple windings comprise a first winding (32) and a second winding (33) in the same winding direction, the first winding (32) is adapted to be electrically conductively connected to the second winding (33) and has an incoming end (321) and an outgoing end (322), and the incoming end (321) or the outgoing end (322) of the first winding (32) comprises two shunt terminals (3221, 3222),
wherein the multiple windings further comprise a third winding (34) wound around the single magnetic core (31), the third winding (34) is in a winding direction opposite to that of the first winding (32), **characterized in that** the third winding (34) and the first winding (32) have the same number of turns.

2. The multi-winding inductive device (3) for a bi-directional DC-DC converter according to claim 1, wherein the first winding (32) is connected in series to the second winding (33) via a rechargeable battery.

3. The multi-winding inductive device (3) for a bi-directional DC-DC converter according to claim 1, wherein the first winding (32) and the second winding (33) have the same number of turns.

4. The multi-winding inductive device (3) for a bi-directional DC-DC converter according to claim 1, wherein the second winding (33) has an incoming end (331) and an outgoing end (332), and the third winding (34) has an incoming end (342) and an outgoing end (341), wherein the incoming end (331) or the outgoing end (332) of the second winding (33) comprises two shunt terminals (3321, 3322), and/or the incoming end (342) or the outgoing end (341) of the third winding (34) comprises two shunt terminals (3421, 3422).

5. The multi-winding inductive device (3) for a bi-directional DC-DC converter according to claim 4, wherein
the incoming end (321) of the first winding (31) and the incoming end (331) of the second winding (33) are dotted terminals, the incoming end (321) of the first winding (31) and the incoming end (331) of the second winding (33) each have an insulating marker for marking it as a differential-mode current input end, and the outgoing end (322) of the first winding (32) and the outgoing end (332) of the second winding (33) each have an insulating marker for marking it as a differential-mode current output end; and/or
the outgoing end (341) of the third winding (34) and the incoming end (321) of the first winding (31) are dotted terminals, the incoming end (342) of the third winding (34) has an insulating marker for marking it as a differential-mode current input end, and the outgoing end (341) of the third winding (34) has an insulating marker for marking it as a differential-mode current output end.

6. The multi-winding inductive device (3) for a bi-directional DC-DC converter according to any of claims 1 to 5, further comprising an insulating member for separating each of the multiple windings, wherein the insulating member is bonded to the single magnetic (31) core by an insulating paste (391, 392, 393).

7. The multi-winding inductive device (3) for a bi-directional DC-DC converter according to any of claims 1 to 5, wherein each of the multiple windings is a single-strand or multi-strand round wire or flat wire.

8. The multi-winding inductive device (3) for a bi-directional DC-DC converter according to any of claims 1 to 5, wherein the single magnetic core (31) is toroidal.

9. A bi-directional DC-DC converter, comprising:
a multi-winding inductive device (3) according to any one of claims 1 to 8, wherein magnetic fields generated by currents in the first winding (32) and the second winding (33) are in the same direction; and
an electronic device (11; 51) comprising multiple transistors (T1, T2, T3; T51, T52, T53, T54) and connected between the multi-winding inductive device (3) and a DC bus, wherein the multiple transistors (T1, T2, T3; T51, T52, T53, T54) are controlled to alternately form a first current loop and a second current loop in a charging mode or a discharging mode, the first current loop comprises a rechargeable battery, the first winding (32), and the second winding (33) connected in series, and the second current loop comprises the rechargeable battery, the first winding (32), the second winding (33), and the DC bus connected in series.

10. The bi-directional DC-DC converter according to claim 9, wherein the DC bus comprises a positive DC bus and a negative DC bus, the electronic device (11; 51) comprises a first transistor (T1), a second transistor (T2), and a third transistor (T3) that are sequentially connected between the positive DC bus and the negative DC bus, the first winding (32) is connected between a node formed by connecting the first transistor (T1) and the second transistor (T2) and a positive electrode of the rechargeable battery, and the second winding (33) is connected between a node formed by connecting the second transistor (T2) and the third transistor (T3) and a negative electrode of the rechargeable battery.

11. The bi-directional DC-DC converter according to claim 10, further comprising a capacitive component connected in parallel to the rechargeable battery, wherein the capacitive component comprises two capacitors connected in series, and a node formed by connecting the two capacitors is grounded.

12. A DC power supply, comprising the bi-directional DC-DC converter according to any of claims 9 to 11 and a rechargeable battery.

13. An uninterruptible power supply, comprising the DC power supply according to claim 12 and an inverter.

## Patentansprüche

1. Mehrwicklige induktive Vorrichtung (3) für einen bidirektionalen Gleichstromumrichter, umfassend:
einen einzelnen Magnetkern (31); und
Mehrfachwicklungen, die um den einzelnen Magnetkern (31) gewickelt sind, wobei die Mehrfachwicklungen eine erste Wicklung (32) und eine zweite Wicklung (33) in derselben Wickelrichtung umfassen, wobei die erste Wicklung (32) angepasst ist, um mit der zweiten Wicklung (33) elektrisch leitend verbunden zu sein, und ein eingehendes Ende (321) und ein ausgehendes Ende (322) aufweist, und das eingehende Ende (321) oder das ausgehende Ende (322) der ersten Wicklung (32) zwei Nebenschlussklemmen (3221, 3222) umfasst,
wobei die mehreren Wicklungen ferner eine dritte Wicklung (34) umfassen, die um den einzelnen Magnetkern (31) gewickelt ist, wobei die dritte Wicklung (34) in einer Wickelrichtung entgegengesetzt der ersten Wicklung (32) ist, **dadurch gekennzeichnet, dass** die dritte Wicklung (34) und die erste Wicklung (32) die gleiche Anzahl von Windungen aufweisen.

2. Mehrwicklige induktive Vorrichtung (3) für einen bidirektionalen Gleichstromumrichter nach Anspruch 1, wobei die erste Wicklung (32) über eine wiederaufladbare Batterie mit der zweiten Wicklung (33) in Reihe geschaltet ist.

3. Mehrwicklige induktive Vorrichtung (3) für einen bidirektionalen Gleichstromumrichter nach Anspruch 1, wobei die erste Wicklung (32) und die zweite Wicklung (33) die gleiche Anzahl von Windungen aufweisen.

4. Mehrwicklige induktive Vorrichtung (3) für einen bidirektionalen Gleichstromumrichter nach Anspruch 1, wobei die zweite Wicklung (33) ein eingehendes Ende (331) und ein ausgehendes Ende (332) aufweist und die dritte Wicklung (34) ein eingehendes Ende (342) und ein ausgehendes Ende (341) aufweist, wobei das eingehende Ende (331) oder das ausgehende Ende (332) der zweiten Wicklung (33) zwei Nebenschlussklemmen (3321, 3322) umfasst und/oder das eingehende Ende (342) oder das ausgehende Ende (341) der dritten Wicklung (34) zwei Nebenschlussklemmen (3421, 3422) umfasst.

5. Mehrwicklige induktive Vorrichtung (3) für einen bidirektionalen Gleichstromumrichter nach Anspruch 4, wobei
das eingehende Ende (321) der ersten Wicklung (31) und das eingehende Ende (331) der zweiten Wicklung (33) gepunktete Klemmen sind, wobei das eingehende Ende (321) der ersten Wicklung (31) und das eingehende Ende (331) der zweiten Wicklung (33) jedes einen isolierenden Marker zum Markieren als ein Differenzmodusstromeingangsende aufweisen und das ausgehende Ende (322) der ersten Wicklung (32) und das ausgehende Ende (332) der zweiten Wicklung (33) jedes einen isolierenden Marker zum Markieren als ein Differenzmodusstromausgangsende aufweisen; und/oder
das ausgehende Ende (341) der dritten Wicklung (34) und das eingehende Ende (321) der ersten Wicklung (31) gepunktete Klemmen sind, wobei das eingehende Ende (342) der dritten Wicklung (34) einen isolierenden Marker zum Markieren als ein Differenzmodusstromeingangsende aufweist und das ausgehende Ende (341) der dritten Wicklung (34) einen isolierenden Marker zum Markieren als ein Differenzmodusstromausgangsende aufweist.

6. Mehrwicklige induktive Vorrichtung (3) für einen bidirektionalen Gleichstromumrichter nach einem der Ansprüche 1 bis 5, ferner umfassend ein Isolierelement zum Trennen jeder der Mehrfachwicklungen, wobei das Isolierelement mit dem einzelnen Magnet(31)-Kern durch eine isolierende Paste (391, 392, 393) bondiert ist.

7. Mehrwicklige induktive Vorrichtung (3) für einen bidirektionalen Gleichstromumrichter nach einem der Ansprüche 1 bis 5, wobei jede der Mehrfachwicklungen ein einsträngiger oder mehrsträngiger Runddraht oder Flachdraht ist.

8. Mehrwicklige induktive Vorrichtung (3) für einen bidirektionalen Gleichstromumrichter nach einem der Ansprüche 1 bis 5, wobei der einzelne Magnetkern (31) torusförmig ist.

9. Bidirektionaler Gleichstromumrichter, umfassend:
eine mehrwicklige induktive Vorrichtung (3) nach einem der Ansprüche 1 bis 8, wobei Magnetfelder, die durch Ströme in der ersten Wicklung (32) und der zweiten Wicklung (33) erzeugt werden, in derselben Richtung sind; und
eine elektronische Vorrichtung (11; 51), umfassend mehrere Transistoren (T1, T2, T3; T51, T52, T53, T54) und verbunden zwischen der mehrwickligen induktiven Vorrichtung (3) und einem Gleichstrombus, wobei die mehreren Transistoren (T1, T2, T3; T51, T52, T53, T54) gesteuert werden, um eine erste Stromschleife und eine zweite Stromschleife in einem Lademodus oder einem Entlademodus abwechselnd zu ausbilden, wobei die erste Stromschleife eine wiederaufladbare Batterie, die erste Wicklung (32) und die zweite Wicklung (33), die in Reihe geschaltet sind, umfasst, und die zweite Stromschleife die wiederaufladbare Batterie, die erste Wicklung (32), die zweite Wicklung (33) und den Gleichstrombus, die in Reihe geschaltet sind, umfasst.

10. Bidirektionaler -Gleichstromumrichter nach Anspruch 9, wobei der Gleichstrombus einen positiven Gleichstrombus und einen negativen Gleichstrombus umfasst, wobei die elektronische Vorrichtung (11; 51) einen ersten Transistor (T1), einen zweiten Transistor (T2) und einen dritten Transistor (T3) umfasst, die zwischen dem positiven Gleichstrombus und dem negativen Gleichstrombus sequentiell verbunden sind, wobei die erste Wicklung (32) zwischen einem Knoten verbunden ist, der durch Verbinden des ersten Transistors (T1) und des zweiten Transistors (T2) und einer positiven Elektrode der wiederaufladbaren Batterie ausgebildet ist, und die zweite Wicklung (33) zwischen einem Knoten verbunden ist, der durch Verbinden des zweiten Transistors (T2) und des dritten Transistors (T3) und einer negativen Elektrode der wiederaufladbaren Batterie ausgebildet ist.

11. Bidirektionaler Gleichstromumrichter nach Anspruch 10, ferner umfassend eine kapazitive Komponente, die mit der wiederaufladbaren Batterie parallelgeschaltet ist, wobei die kapazitive Komponente zwei Kondensatoren, die in Reihe geschaltet sind, umfasst, und ein Knoten, der durch Verbinden der zwei Kondensatoren ausgebildet ist, geerdet ist.

12. Gleichstromversorgung, umfassend den bidirektionalen Gleichstromumrichter nach einem der Ansprüche 9 bis 11 und eine wiederaufladbare Batterie.

13. Unterbrechungsfreie Stromversorgung, umfassend die Gleichstromversorgung nach Anspruch 12 und einen Wechselrichter.

## Revendications

1. Dispositif inductif à enroulements multiples (3) destiné à un convertisseur CC-CC bidirectionnel, comprenant :
un unique noyau magnétique (31) ; et
de multiples enroulements enroulés autour de l'unique noyau magnétique (31), dans lequel les multiples enroulements comprennent un premier enroulement (32) et un deuxième enroulement (33) dans la même direction d'enroulement, le premier enroulement (32) est adapté pour être connecté électriquement par conduction au deuxième enroulement (33) et a une extrémité entrante (321) et une extrémité sortante (322), et l'extrémité entrante (321) ou l'extrémité sortante (322) du premier enroulement (32) comprend deux bornes de dérivation (3221, 3222),
dans lequel les multiples enroulements comprennent en outre un troisième enroulement (34) enroulé autour de l'unique noyau magnétique (31), le troisième enroulement (34) est dans une direction d'enroulement opposée à celle du premier enroulement (32), **caractérisé en ce que** le troisième enroulement (34) et le premier enroulement (32) ont le même nombre de spires.

2. Dispositif inductif à enroulements multiples (3) destiné à un convertisseur CC-CC bidirectionnel selon la revendication 1, dans lequel le premier enroulement (32) est connecté en série au deuxième enroulement (33) par l'intermédiaire d'une batterie rechargeable.

3. Dispositif inductif à enroulements multiples (3) destiné à un convertisseur CC-CC bidirectionnel selon la revendication 1, dans lequel le premier enroulement (32) et le deuxième enroulement (33) ont le même nombre de spires.

4. Dispositif inductif à enroulements multiples (3) destiné à un convertisseur CC-CC bidirectionnel selon la revendication 1, dans lequel le deuxième enroulement (33) a une extrémité entrante (331) et une extrémité sortante (332), et le troisième enroulement (34) a une extrémité entrante (342) et une extrémité sortante (341), dans lequel l'extrémité entrante (331) ou l'extrémité sortante (332) du deuxième enroulement (33) comprend deux bornes de dérivation (3321, 3322), et/ou l'extrémité entrante (342) ou l'extrémité sortante (341) du troisième enroulement (34) comprend deux bornes de dérivation (3421, 3422).

5. Dispositif inductif à enroulements multiples (3) destiné à un convertisseur CC-CC bidirectionnel selon la revendication 4, dans lequel
l'extrémité entrante (321) du premier enroulement (31) et l'extrémité entrante (331) du deuxième enroulement (33) sont des bornes en pointillé, l'extrémité entrante (321) du premier enroulement (31) et l'extrémité entrante (331) du deuxième enroulement (33) ont chacune un marqueur isolant destiné à la marquer en tant qu'extrémité d'entrée de courant en mode différentiel, et l'extrémité sortante (322) du premier enroulement (32) et l'extrémité sortante (332) du deuxième enroulement (33) ont chacune un marqueur isolant destiné à la marquer en tant qu'extrémité de sortie de courant en mode différentiel ; et/ou
l'extrémité sortante (341) du troisième enroulement (34) et l'extrémité entrante (321) du premier enroulement (31) sont des bornes en pointillé, l'extrémité entrante (342) du troisième enroulement (34) a un marqueur isolant destiné à la marquer en tant qu'extrémité d'entrée de courant en mode différentiel, et l'extrémité sortante (341) du troisième enroulement (34) a un marqueur isolant destiné à la marquer en tant qu'extrémité de sortie de courant en mode différentiel.

6. Dispositif inductif à enroulements multiples (3) destiné à un convertisseur CC-CC bidirectionnel selon l'une quelconque des revendications 1 à 5, comprenant en outre un élément isolant destiné à séparer chacun des multiples enroulements, dans lequel l'élément isolant est lié à l'unique noyau magnétique (31) par une pâte isolante (391, 392, 393).

7. Dispositif inductif à enroulements multiples (3) destiné à un convertisseur CC-CC bidirectionnel selon l'une quelconque des revendications 1 à 5, dans lequel chacun des multiples enroulements est un fil rond ou fil plat à brin unique ou à brins multiples.

8. Dispositif inductif à enroulements multiples (3) destiné à un convertisseur CC-CC bidirectionnel selon l'une quelconque des revendications 1 à 5, dans lequel l'unique noyau magnétique (31) est toroïdal.

9. Convertisseur CC-CC bidirectionnel, comprenant :
un dispositif inductif à enroulements multiples (3) selon l'une quelconque des revendications 1 à 8, dans lequel des champs magnétiques générés par des courants dans le premier enroulement (32) et le deuxième enroulement (33) sont dans la même direction ; et
un dispositif électronique (11 ; 51) comprenant de multiples transistors (T1, T2, T3 ; T51, T52, T53, T54) et connecté entre le dispositif inductif à enroulements multiples (3) et un bus CC, dans lequel les multiples transistors (T1, T2, T3 ; T51, T52, T53, T54) sont commandés pour former en alternance une première boucle de courant et une seconde boucle de courant dans un mode de charge ou un mode de décharge, la première boucle de courant comprend une batterie rechargeable, le premier enroulement (32) et le deuxième enroulement (33) connectés en série, et la seconde boucle de courant comprend la batterie rechargeable, le premier enroulement (32), le deuxième enroulement (33) et le bus CC connectés en série.

10. Convertisseur CC-CC bidirectionnel selon la revendication 9, dans lequel le bus CC comprend un bus CC positif et un bus CC négatif, le dispositif électronique (11 ; 51) comprend un premier transistor (T1), un deuxième transistor (T2) et un troisième transistor (T3) qui sont séquentiellement connectés entre le bus CC positif et le bus CC négatif, le premier enroulement (32) est connecté entre un noeud formé en connectant le premier transistor (T1) et le deuxième transistor (T2) et une électrode positive de la batterie rechargeable, et le deuxième enroulement (33) est connecté entre un noeud formé en connectant le deuxième transistor (T2) et le troisième transistor (T3) et une électrode négative de la batterie rechargeable.

11. Convertisseur CC-CC bidirectionnel selon la revendication 10, comprenant en outre un composant capacitif connecté en parallèle à la batterie rechargeable, dans lequel le composant capacitif comprend deux condensateurs connectés en série, et un noeud formé en connectant les deux condensateurs est relié à la terre.

12. Alimentation CC, comprenant le convertisseur CC-CC bidirectionnel selon l'une quelconque des revendications 9 à 11 et une batterie rechargeable.

13. Alimentation sans interruption, comprenant l'alimentation CC selon la revendication 12 et un onduleur.
